# EUROPÄISCHE PATENTSCHRIFT

(11) **EP 1 817 205 B1**
(45) Veröffentlichungstag und Bekanntmachung des Hinweises auf die Patenterteilung: **03.09.2008**
(21) Anmeldenummer: 05807771.0
(22) Anmeldetag: 15.11.2005
(51) Int. Cl.: B60R 7/06, B60R 21/045

(54) **STAUFACHVORRICHTUNG**
CUBBY HOLE DEVICE
DISPOSITIF DE VIDE-POCHES

(30) Priorität: 15.11.2004 DE 102004055654
(43) Veröffentlichungstag der Anmeldung: 15.08.2007
(73) Patentinhaber: Faurecia Innenraum Systeme GmbH, 76767 Hagenbach (DE)
(72) Erfinder: SAUER, Rolf, 68794 Oberhausen-Rheinhausen (DE); GUTH, Oliver, 67376 Harthausen (DE); PLAGGENBORG, Guenther, 26131 Oldenburg (DE)
(74) Vertreter: Pfenning, Meinig & Partner GbR
(86) Internationale Anmeldenummer: PCT/EP2005/012402
(87) Internationale Veröffentlichungsnummer: WO 2006/050997

(56) Entgegenhaltungen:
- DE-A1- 10 055 051
- US-A1- 2004 227 371
- PATENT ABSTRACTS OF JAPAN Bd. 1997, Nr. 06, 30. Juni 1997 (1997-06-30) -& JP 09 039699 A (SUZUKI MOTOR CORP), 10. Februar 1997 (1997-02-10)

## Beschreibung

Die Erfindung betrifft eine Staufachvorrichtung für Fahrzeuge, wobei das in der Staufachvorrichtung beinhaltete Staufach zum Schutz des Insassen bei einem insbesondere unfallbedingten Aufprall sich gegen einen äußeren Rahmen, an welchem das Staufach befestigt ist, verschiebt.

Ein solches Ablagefach ist Gegenstand der US 54 13 379, wobei das als Handschuhfach ausgeführte Staufach mit einem Deckel verschließbar ist. Dieser Deckel ist über ein Energie-Absorptions-Element an der Karosseriestruktur abgestützt und erlaubt so bei einem Aufprall des Insassen mit seinem Knie- oder Unterschenkelbereich eine energieaufnehmende Deformation.

Die DE 1.00551051 und JP-A-09 039699 offenbarten Handschuhkasten für ein Personenkraftfahrzeug, wobei an der Karosserie eine deformierbare Stange befestigt ist, durch die der Deckel des Handschuhkastens abgestützt ist. Diese Stange deformiert sich bei einem Aufprall des Insassen auf den Deckel des Handschuhkastens, wobei diese Stange einen abschnittsweisen unterschiedlichen Verformungswiderstand aufweist.

Die DE 42 43 791 offenbart einen Kniefänger für ein Kraftfahrzeug, der auch als Handschuhfach gestaltet sein kann, wobei der Deckel des Kniefängers über ein Deformationsglied an der Karosserie abgestützt ist und in seinem unteren Bereich über ein Viergelenkgetriebe mit der Karosserie verbunden ist. Bei einem Aufprall wird die Schwenkachse des Kniefängers verlagert, wodurch der unfallbedingte Aufprall eines Insassen gedämpft wird.

Nachteil des hier aufgelisteten Stands der Technik ist, dass zusätzliche Bauteile notwendig sind um zu gewährleisten, dass bei einem unfallbedingten Aufprall eines Insassen auf das Staufach das Staufach sich verschiebt um Raum für den Insassen zu schaffen und/oder den Aufprall zu dämpfen.

Die Erfindung hat sich die Aufgabe gesetzt, eine Staufachvorrichtung für Fahrzeuge zu entwerfen, bei dem das Staufach sich aufgrund eines insbesondere unfallbedingten Aufpralls eines Insassen gegen den äußeren Rahmen verschiebt, ohne dass solche zusätzlichen Bauteile notwendig sind.

Die Erfindung löst diese Aufgabe durch die Merkmale des Patentanspruchs 1.

Die Erfindung betrifft ein Staufachvorrichtung für Fahrzeuge, wobei die Staufachvorrichtung ein Staufach, einen ersten Halter, einen zweiten Halter, eine Verriegelung und einen Träger beinhaltet, wobei der Träger zum einen mit einem äußeren Rahmen verbunden ist, und der Träger zum anderen mit einem der beiden Halter verbunden ist, und das Staufach mit dem anderen der beiden Halter verbunden ist, und der erste Halter und der zweite Halter drehbar ineinander gelagert sind, und die Verriegelung den ersten Halter und den zweiten Halter gegeneinander arretiert, dergestalt, dass durch einen insbesondere durch einen Aufprall eines Fahrzeuginsassen erzeugten hohen Druck auf das Staufach das Staufach sich gegen den äußeren Rahmen verschiebt, aufgrund dessen, dass der Träger durch den hohen Druck plastisch deformiert wird und/oder der erste Halter plastisch deformiert wird und/oder der zweite Halter sich gegen den ersten Halter verdreht.

Ist eine plastische Deformation des Trägers vorgesehen, wird bei einem Aufprall das Staufach unter plastischer Deformation des Trägers in Richtung der Krafteinwirkung verschoben. Durch die plastische Deformation des Trägers wird Energie aufgenommen. Ein Aufprall eines Insassen kann bei entsprechender Wahl des Materials des Trägers und entsprechenden Aufbau des Trägers gezielt gedämpft werden, wodurch das Verletzungsrisiko verringert wird. Gleiches gilt für den Fall, dass im Falle eines Aufpralls eine Deformation des ersten Halters vorgesehen ist. Hier dreht sich das Staufach über das durch die Halter dargestellte Scharnier im Sinne der Krafteinwirkung hinweg, wobei diese Drehbewegung aufgrund der plastischen Deformation gedämpft verläuft.
Durch das zuletzt genannte Merkmal, dass sich der zweite Halter gegen den ersten Halter verdreht, wird insbesondere unter einem Aufprall eine reine Drehbewegung des Staufachs um das durch die Halter dargestellte Scharnier ausgeführt. Hierdurch wird durch eine Vergrößerung des Raums eine Schutzwirkung des Insassen gewährleistet. Die Drehbewegung ist dabei vorteilhafterweise so ausgelegt, dass sich der Deckel mindestens um 70 mm kraftlos in die vom Aufprall vorgegebene Richtung wegdreht.

Vorteilhafte Ausführungsformen der Erfindung werden in den abhängigen Patentansprüchen verwirklicht.

Eine vorteilhafte Ausführungsform der Erfindung sieht vor, dass die Verriegelung daraus besteht, dass ein verschiebbarer Bolzen in einem der beiden Halter geführt ist, und dass der andere Halter eine Haltestruktur aufweist, und der Bolzen in diese Haltestruktur eingreifen kann, um den ersten Halter und den zweiten Halter gegeneinander zu arretieren. Dadurch ist eine Fixierung des Staufachs in gewünschter Position möglich, beispielsweise die Fixierung des geschlossenen Zustands des Staufachs.

Eine weitere vorteilhafte Ausführungsform der Erfindung sieht vor, den Bolzen so zu schwächen, dass dieser bei dem hohen Druck auf das Staufach zur Freigabe einer Drehbewegung des Staufachs zerstört wird. Durch die Drehbewegung des Staufachs wird Raum für den Insassen freigegeben, wodurch die Verletzungsgefahr des Insassen verringert wird. Eine Schwächung des Bolzens kann beispielsweise durch die Wahl eines speziellen Materials und/oder durch die Wahl einer bestimmten Form umgesetzt werden.

Eine weitere vorteilhafte Ausführungsform der Erfindung sieht vor, dass die sich an dem anderen Halter befindende Haltestruktur so geschwächt ist, dass diese bei dem hohen Druck auf das Staufach zur Freigabe einer Drehbewegung zerstört wird. Hier ergeben sich die gleichen Vorteile wie bei der Zerstörung des in dem anderen Halter geführten Bolzens.

Eine weitere vorteilhafte Ausführungsform der Erfindung sieht vor, dass die Verriegelung daraus besteht, dass an einem der beiden Halter eine Nase vorgesehen ist, und an dem anderen Halter ein Übergriff vorgesehen ist, und der Übergriff die Nase im arretierten Zustand der beiden Halter übergreift. Mit solch einer Verriegelung kann das Staufach in einer Position fixiert werden, beispielsweise in der Position im geschlossenen Zustand des Staufachs.

Eine weitere vorteilhafte Ausführungsform der Erfindung sieht vor, dass der Übergriff so geschwächt ist, dass dieser bei dem hohen Druck auf das Staufach zur Freigabe einer Drehbewegung zerstört wird.

Eine weitere vorteilhafte Ausführungsform der Erfindung sieht vor, dass die Nase so geschwächt ist, dass diese bei einem hohen Druck auf das Staufach zur Freigabe einer Drehbewegung zerstört wird.

Eine weitere vorteilhafte Ausführungsform der Erfindung sieht vor, dass der Träger und der mit dem Träger verbundene Halter formschlüssig miteinander verbunden sind. Dadurch ist ein stabiler Verbund von Träger und Halter unter Vermeidung von aufwendigen Befestigungsmitteln erreicht. Sieht man eine Deformation des Trägers aufgrund einer Drehbewegung des mit dem Träger verbundenen Halters vor, kann man den Verlauf dieser Drehbewegung über die Gestaltung der Form des Halters und der Wahl des Materials des Trägers beeinflussen. Insbesondere wird man die Form des Halters und das Material des Trägers so wählen, dass eine für den Schutz eines Insassen möglichst vorteilhafte Dämpfung gewährleistet ist. Gleiches gilt im umgekehrten Fall, dass der mit dem Träger verbundene Halter deformiert wird und ebenso für den Fall, dass dieser Halter und der Träger zusammen deformiert werden.

Eine weitere vorteilhafte Ausführungsform der Erfindung sieht vor, dass der mit dem Träger verbundene Halter die Grundform eines Zylinders besitzt. Körper mit einer Zylinderform sind besonders einfach herzustellen und aufgrund ihrer Kompaktheit sehr stabil.

Eine weitere vorteilhafte Ausführungsform der Erfindung sieht vor, dass der mit dem Träger verbundene Halter an seiner Umrandung ein oder mehrere Nocken oder Zähne aufweist. Sieht man eine Deformation des Trägers aufgrund einer Drehbewegung des mit dem Träger verbundenen Halters vor, wird die plastische Deformation auch durch die Form der Nocken oder Zähne beeinflusst. Besitzt der mit dem Träger verbundene Halter die Grundform eines Zylinders, so wird die plastische Deformation überwiegend durch diese Nocken oder Zähne bestimmt. Durch die Gestaltung der Nocken kann man somit gezielt Einfluss auf die Drehbewegung im Falle der Ausübung des hohen Drucks auf das Staufach nehmen. Eben gesagtes gilt auch für den umgekehrten Fall, dass der mit dem Träger verbundene Halter deformiert wird und ebenso für den Fall, dass dieser Halter und der Träger zusammen deformiert werden.

Eine weitere vorteilhafte Ausführungsform der Erfindung sieht vor, dass, falls eine Deformation des Trägers erwünscht ist, der Träger aus Leichtmetall, Leichtmetallschaum, Kunststoff, Kunststoffschaum, Kunststoffverbundwerkstoffen, Stahl oder einer Zusammensetzung dieser Materialien besteht. Diese Materialien sind geeignet, um die oben genannten Bedingungen bezüglich der plastischen Deformierbarkeit zu erfüllen.

Eine weitere vorteilhafte Ausführungsform der Erfindung sieht vor, dass, falls eine Deformation des mit dem Träger verbunden Halters erwünscht ist, der mit dem Träger verbundene Halter aus Leichtmetall, Leichtmetallschaum, Kunststoff, Kunststoffschaum, Kunststoffverbundwerkstoffen, Stahl oder einer Zusammensetzung dieser Materialien besteht. Diese Materialien sind geeignet, um die oben genannten Bedingungen bezüglich der plastischen Deformierbarkeit zu erfüllen.

Eine weitere vorteilhafte Ausführungsform der Erfindung sieht vor, dass der erste Halter und der zweite Halter ineinander gelagert sind. Eine Lagerung des ersten Halters und des zweiten Halters ineinander ermöglicht eine Reduzierung der Ausdehnung bezüglich der Raumrichtung parallel zur Drehachse des Staufachs. Die Halter können insbesondere so gestaltet sein, dass der eine Halter den anderen Halter in der Drehbewegung führt. Dadurch ist eine besondere Stabilität diese Systems gegeben.

Eine weitere vorteilhafte Ausführungsform der Erfindung sieht vor, dass die Drehbewegung des ersten Halters gegen den zweiten Halter rotationsgedämpft ist. Dadurch wird das Öffnen und das Schließen des Staufaches gedämpft, insbesondere wird ein hartes Anschlagen vermieden.

Eine weitere vorteilhafte Ausführungsform der Erfindung sieht vor, dass die Rotationsdämpfung dadurch umgesetzt ist, dass ein bewegliches, silikongedämpftes Zahnrad an einem der beiden Halter angebracht ist und eine Zahnstruktur am anderen Halter angebracht ist, und das Zahnrad in die Zahnstruktur eingreift. Die Dämpfung wird in diesem Falle dadurch bewirkt, dass das Zahnrad in Silikon gelagert ist.

Eine weitere vorteilhafte Ausführungsform der Erfindung sieht vor, dass das Staufach ein Handschuhkasten in einer Instrumententafel ist.

Die Erfindung wird nun anhand eines Ausführungsbeispiels erläutert. Die zugehörigen Figuren zeigen:
**Figur 1** zeigt schematisch eine Vorderansicht der an einem äußeren Rahmen befestigten Staufachvorrichtung.
**Figur 2** zeigt den zweiten Halter in einer Seitenansicht.
**Figur 3** zeigt den ersten Halter in einer Seitenansicht.
**Figur 4** zeigt den zweiten Halter, gelagert in den ersten Halter, mit einer Verriegelung nach einer ersten Ausführungsform, integriert im Träger, in einer Seitenansicht.
**Figur 5** zeigt ein Ausführungsbeispiel des ersten und zweiten Halters mit einer Verriegelung nach einer zweiten Ausführungsform in der Seitenansicht.

Zwecks Klarheit der Ausrichtung wurde ein kartesisches Koordinatensystem mit den Achsen x, y, z eingeführt.

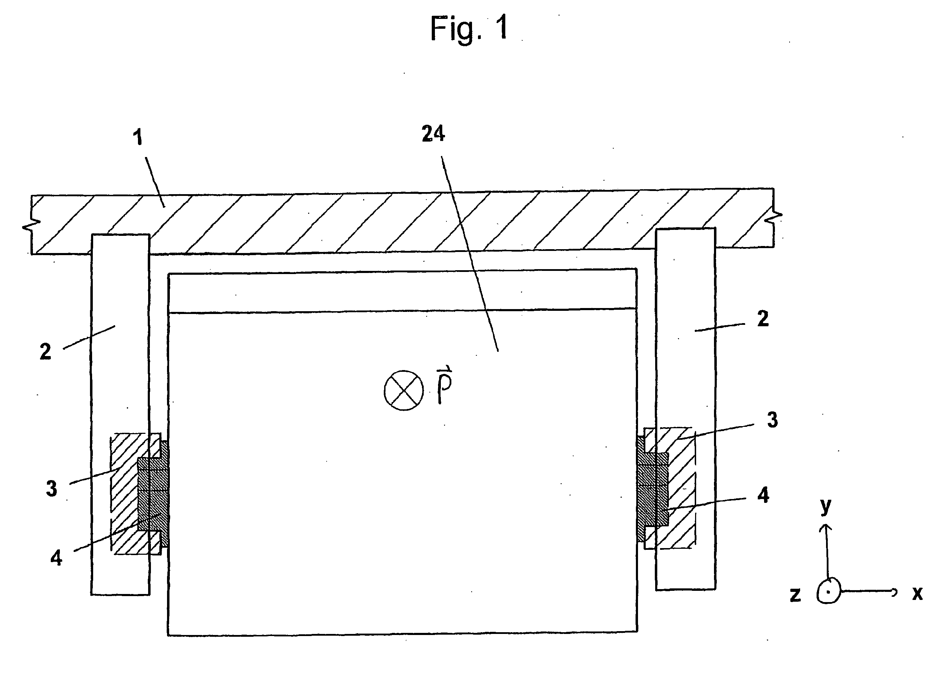

Figur 1 zeigt schematisch eine Vorderansicht der an einem äußeren Rahmen befestigten Staufachvorrichtung. An einem Rahmen 1, in diesem Ausführungsbeispiel die Karosserie eines PKWs, sind zwei Träger 2 parallel zueinander befestigt, wobei der Abstand dieser beiden Träger etwas breiter ist als die Breite eines vorgesehenen Staufachs 24. Am unteren, dem Rahmen entgegenliegendem Ende der Träger ist in jedem der beiden Träger ein erster Halter 3 formschlüssig in den Träger integriert, wobei die Position der beiden Halter so gewählt ist, dass diese sich gegenüber liegen. In diesen beiden Haltern ist jeweils ein zweiter Halter 4 drehbar gelagert. An diesen zweiten Haltern befestigt ist ein Staufach 24, welches somit zwischen den beiden Trägern 2 liegt.

In dieser Darstellung ist das Staufach 24 einem Insassen entgegengerichtet. Im Falle eines insbesondere unfallbedingten Aufpralls eines Insassen wirkt auf das Staufach 24 ein hoher Druck "P" in Richtung der z-Achse.

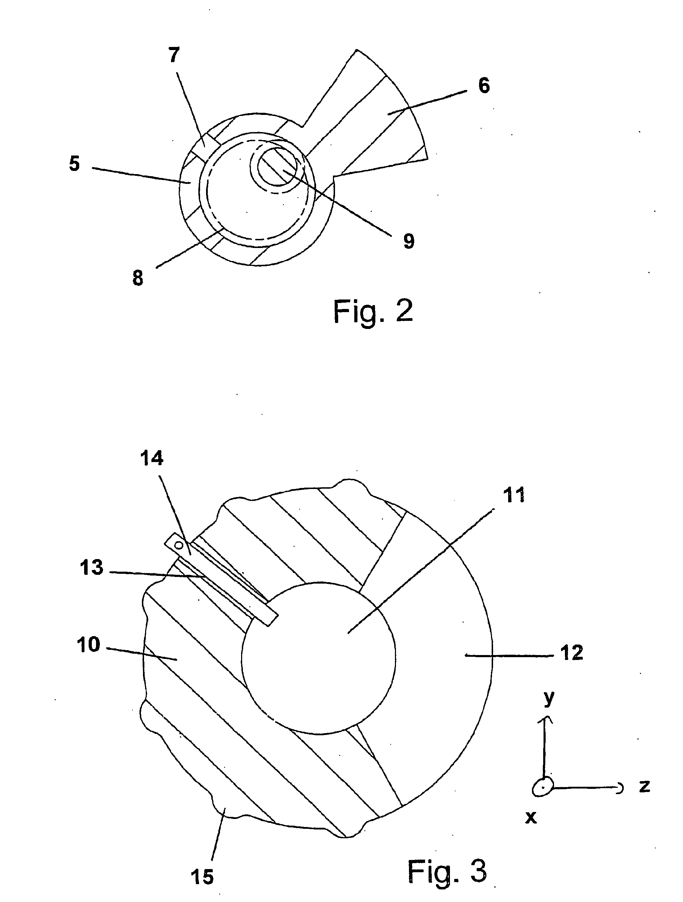

Figur 2 zeigt den zweiten Halter 4 in einer Seitenansicht. Der zweite Halter 4 besitzt die Form eines Zylinders 5 mit einer von diesem Zylinder ausgehenden Lasche 6, die sich in etwa über ein Viertel des Umfangs des Zylinders erstreckt und deren Querschnittsfläche vergleichbar ist mit der Querschnittsfläche des Zylinders. Auf dem Zylinder, der Lasche in einem Winkel von etwa 90° entgegenliegend, ist eine Kerbe 7 eingefügt. Diese Kerbe ist für eine Verriegelung nach einer ersten Ausführungsform vorgesehen: Ein im ersten Halter 3 geführter Bolzen kann in diese Kerbe 7 eingreifen, um eine Arretierung des ersten Halters 3 gegen den zweiten Halter 4 zu bewirken.

Des weiteren ist in dem in Figur 2 gezeigten Halter 4 die Innenseite des Zylinders 5 mit einer umlaufenden Zahnstruktur 8 versehen. In diese Zahnstruktur greift ein Zahnrad 9 ein, welches, hier nicht näher dargestellt, in Silikon gelagert ist. Das Zahnrad selbst ist mit dem zweiten Halter 4 verbunden. Bewegt man nun den ersten Halter 3 gegen den zweiten Halter 4 durch Öffnen oder Schließen des Staufachs 24, wird diese Bewegung durch das Drehen des silikongedämpften Zahnrads 9 gedämpft. Inwieweit die oben erwähnte Zahnstruktur 8 umlaufend gestaltet werden muss, hängt von dem gewünschten Öffnungswinkel des Staufachs 24 ab; eine teilweise umlaufende Zahnstruktur 8 ist deswegen auch denkbar.

Den zweiten Halter 4 kann man aus verschiedenen Materialien herstellen, wie z.B. aus Leichtmetall, Leichtmetallschaum, Kunststoff, Kunststoffschaum, Kunststoffverbundwerkstoffen oder Stahlwerkstoffen. In diesem Ausführungsbeispiel ist der zweite Halter 4 aus Aluminium gefertigt.

Figur 3 zeigt den ersten Halter 3 in einer Seitenansicht. Der erste Halter 3 besitzt die Grundform eines Zylinders 10. In der Mitte diese Zylinders 10 befindet sich eine kreisförmige Aussparung 11, die sich in einem bestimmten Winkelbereich 12 nach außen öffnet. Diese Aussparung ist in ihren Abmaßen so gestaltet, dass darin der zweite Halter 4 drehbar gelagert werden kann. In seinem Rand besitzt der erste Halter 3 einen Führungskanal 13 für einen Bolzen 14. Der Führungskanal 13 und der Bolzen 14 sind für eine Verriegelung nach einer ersten Ausführungsform vorgesehen. Der erste Halter 3 ist an seiner Außenseite mit mehreren Nocken 15 versehen.

Den ersten Halter 3 kann man aus verschiedenen Materialien herstellen, wie z.B. aus Leichmetall, Leichtmetallschaum, Kunststoff, Kunststoffschaum, Kunststoffverbundwerkstoffen oder Stahlwerkstoffen. In diesem Ausführungsbeispiel ist der erste Halter 3 aus Aluminium gefertigt.

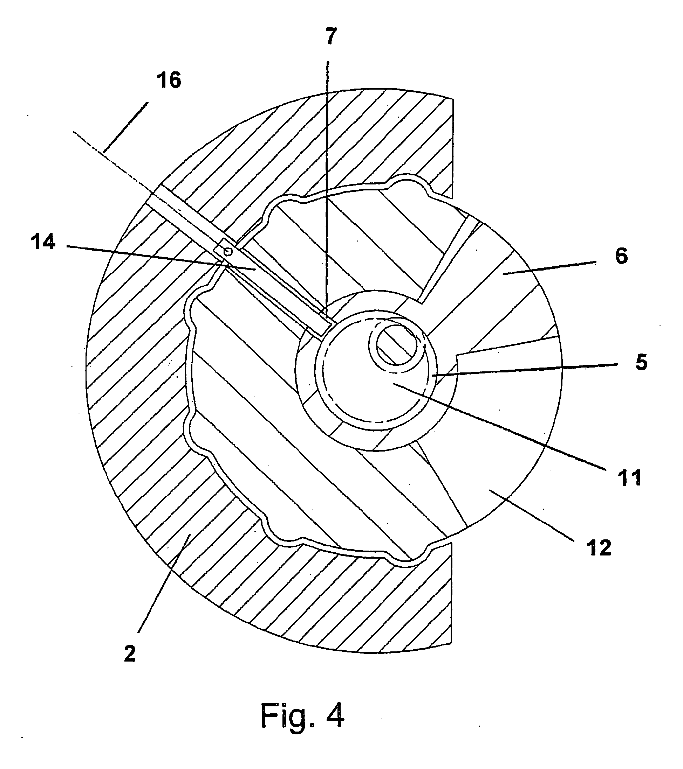

Figur 4 zeigt den zweiten Halter 4, gelagert in dem ersten Halter, mit einer Verriegelung nach einer ersten Ausführungsform, integriert im Träger, in einer Seitenansicht. In dieser Figur ist erkennbar, dass der zylinderförmige Teil des zweiten Halters 5 passend zu der kreisförmigen Aussparung 11 des ersten Halters ist. Dadurch ist eine stabile Lagerung des ersten Halters 3 im zweiten Halter 4 erreicht, und ebenfalls auch eine Führung des zweiten Halters 4 bei einer Drehbewegung. Die im ersten Halter enthaltene Aussparung 11, die sich in einem bestimmten Winkelbereich 12 öffnet , ist des weiteren so gestaltet, dass sich die Lasche 6 des zweiten Halters 4 innerhalb dieses Winkelbereichs 12 frei bewegen kann, um das Öffnen und Schließen des Staufachs 24 zu ermöglichen. Insbesondere ist dieser Winkelbereich 12 so groß, dass das Staufach 24 bei einem insbesondere unfallbedingtem Aufprall sich über seine Öffnungs- oder Schließposition weiter in die durch den Aufprall vorgegebene Richtung verdrehen kann. Sieht man solch eine Drehbewegung nicht vor, kann man den Winkelbereich 12 so gestalten, dass die Lasche 6 bei geöffnetem und/oder bei geschlossenem Staufach an die den Winkelbereich 12 begrenzenden Flächen des ersten Halters 3 anschlägt.

Figur 4 zeigt die Situation, in dem der im ersten Halter 3 geführte Bolzen 14 in die Kerbe 7 des zweiten Halters 4 eingreift und somit die beiden Halter arretiert. Der Bolzen 14 besteht dabei aus Kunststoff und ist an seinem unteren Ende durch eine Einkerbung geschwächt. Alternativ ist hier auch ein Bolzen aus z.B. Metall möglich, der durch die generelle konstruktive Auslegung einen Schwächungsbereich hat. Der Bolzen wird betätigt über einen Bowdenzug 16, der mit einem nicht näher gezeigtem Schalter verbunden ist. Bei einem insbesondere unfallbedingtem Aufprall bricht der Bolzen 14 aufgrund des hohen Drucks an seinem Ende ab und ermöglicht auf diese Weise eine Drehbewegung des zweiten Halters 4 und somit auch des Staufachs 24. Als Alternative ist auch möglich, dass die Haltestruktur bei einem hohen Druck zerstört wird und auf diese Weise eine Drehbewegung freigibt. Hier kann beispielsweise die Form der Kerbe so gewählt sein, beispielsweise durch Anschrägen, dass bei dem hohen Druck der Bolzen 14 aus der Kerbe gedrückt wird, wodurch ebenfalls eine Drehbewegung des Staufachs 24 freigegeben wäre.

Des weiteren zeigt Figur 4, dass der erste Halter 3 in dem Träger 2 formschlüssig eingebettet ist. Der Träger 2 besteht in dem Bereich, in dem der erste Halter 3 eingebettet ist, aus Aluminiumschaum, wobei im Prinzip hier alle durch ihre Struktur energieaufnehmenden Materialien geeignet wären. Bei einem insbesondere unfallbedingtem Aufprall eines Insassen auf das Staufach 24 deformiert sich aufgrund des durch diesen Druck bewirkten Drehmoments auf den ersten Halter 3 unter der Drehbewegung des ersten Halters 3 diese Aluminiumschaumstruktur des Trägers 2, wodurch der Aufprall des Insassen abgebremst wird. Alternativ kann auch der erste Halter 3 aus einem leicht plastisch deformierbaren Material und der Träger 2 aus einem schwer deformierbaren Material gefertigt sein, oder auch Träger 2 und erster Halter 3 aus einem deformierbarem Material bestehen. Dadurch würde eine wie oben beschriebene ähnliche Wirkung erzielt.

In diesem Ausführungsbeispiel sind die Funktionalitäten wie Öffnungsmechanismus des Staufachs, Rotationsdämpfung, Öffnungswinkelbegrenzung des Staufachs usw. den Haltern 3 und 4 zugeordnet. Halter 3 und/oder 4 können als Scheiben aufgebaut werden um eine Verstellung der Funktion bei der Vormontage der Halter zu gewährleisten. Die Scheiben werden z.B. stoff- oder formschlüssig gefügt. Diesbezüglich ist eine modulare Anordnung von Bauteilen in Scheibenform, vorteilhafterweise stoff- und/oder formschlüssig, auf der Achse, um die das Staufach 24 beim Öffnen und Schließen verkippt wird, vorstellbar, wobei jedes dieser Bauteile eine oder mehrere Funktionalitäten übernimmt.

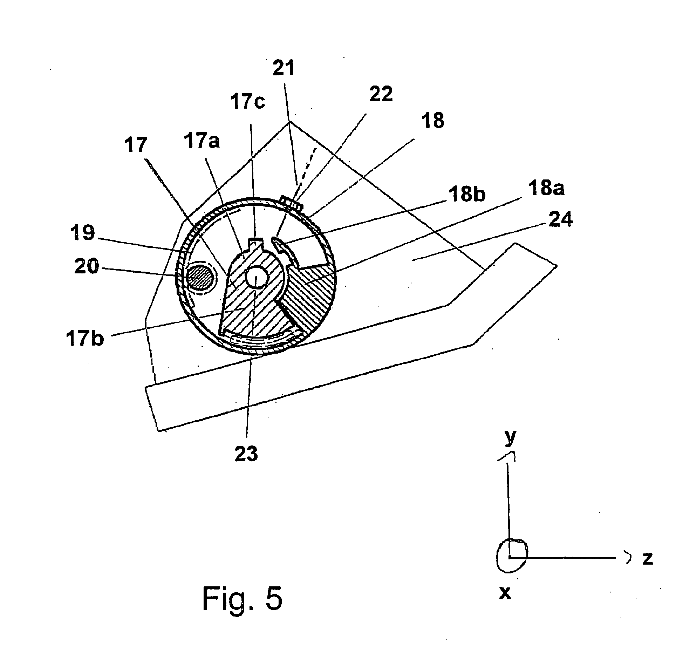

Figur 5 zeigt ein Ausführungsbeispiel des ersten Halters 17 und des zweiten Halters 18 mit einer Verriegelung nach einer zweiten Ausführungsform in der Seitenansicht. Der zweite Halter ist hierbei an dem Staufach 5 befestigt, der erste Halter 18 ist befestigt mit dem hier nicht eingezeichneten Träger 2. Der erste Halter hat die Form eines Zylinders 17a mit einer sich an seiner Umrandung befindenden Aufliegelasche 17b. Ebenfalls auf der Umrandung des ersten Halters 17 befindet sich eine rechteckförmige Nase 17c. Der zweite Halter 18 besitzt die Form eines Hohlzylinders mit einer nach innen hineinragenden Lasche 18a. An dieser Lasche 18a ist ein Übergriff 18b mit einer rechteckförmigen Aussparung. Der Übergriff selber ist mit einem Bowdenzug 21 verbunden, der durch eine Öffnung 22 aus dem zweiten Halter herausgeführt wird. Der Lasche gegenüber liegend befindet sich, ebenfalls auf der Innenseite des Hohlzylinders, eine sich teilweise über den Innenrand erstreckende Zahnstruktur 19. In diese Zahnstruktur 19 greift ein silikongedämpftes Zahnrad 20 ein, welches an dem Träger 2, hier nicht näher dargestellt, befestigt ist.

Der erste Halter 17 und der zweite Halter 18 sind drehbar um eine nicht näher dargestellte Achse gelagert, wobei die Achse durch eine im ersten Halter 17 zylindrische Aussparung 23 verläuft. Der erste Halter 17 und der zweite Halter 18 sind in diesem Ausführungsbeispiel so gestaltet, dass im geöffneten Zustand des Staufachs 24 die sich an dem ersten Halter befindende Aufliegelasche 17b auf der sich am zweiten Halter befindenden Lasche 18a zu liegen kommt, wie in Figur 5 dargestellt. Im geschlossenen Zustand übergreift der sich am zweiten Halter 18 befindende Übergriff 18b die sich am ersten Halter 17 befindende Nase 17c, wodurch eine Arretierung der Drehbewegung der beiden Halter gegeneinander erfolgt.

In diesem Ausführungsbeispiel ist der erste Halter 17 aus Kunststoff und der zweite Halter 18 aus Kunststoff. Alternativ sind z.B. auch metallische Federelemente geeignet.

Die sich an dem ersten Halter 17 befindende Nase 17c ist einerseits so schwach ausgeprägt, dass durch einen insbesondere durch einen Aufprall eines Fahrzeugsinsassen erzeugten hohen Druck die Nase 17c durch den Übergriff 18b abgerissen wird, andererseits berücksichtigt die konstruktive Auslegung eine Missbrauchskraft bei Offenstellung des Staufachs 24. Durch das Abreißen der Nase 17c ist eine Drehbewegung des Staufachs freigegeben. Als Alternative kann auch der Übergriff so geschwächt sein, dass dieser unter einem hohen Druck abreißt, eine weitere Möglichkeit wäre, dass der Übergriff eine solche Form besitzt, beispielsweise die Form einer steilen Rampe, dass dieser sich unter einem hohem Druck von der Nase loslöst und die Drehbewegung des Staufachs 24 freigibt.

Vorteilhafterweise ist das Staufach derart ausgebildet, dass es bei einem Auftreffen eines Insassens, insbesondere bei einem Auftreffen der Knie, kollabieren kann. Ein derartiges Staufach weist erfindungsgemäß einen Deckel, der die Sichtseite des Staufachs bildet, und ein rückseitig am Deckel angeordnetes Inneneinsatzteil auf.

Beispielsweise kann das Inneneinsatzteil eine kasten, wannen- oder schalenartige Form aufweisen, welche beispielsweise mittels Schrauben, Clipse oder anderer Befestigungsmittel an einem im wesentlichen Plattenförmigen Deckel befestigt ist.

Das Inneneinsatzteil ist erfindungsgemäß derart aufgebaut, dass es bei den hier diskutierten Drücken kollabieren kann. Um dies zu ermöglichen, wird als Material ein Schaummaterial verwendet. Beispielsweise kann für das Inneneinsatzteil PUR-, Polystyrol-, PP-oder PE- Schaum eingesetzt werden.

Der Deckel selbst ist vorteilhafterweise derart aufgebaut, dass er bei den diskutierten Drücken im Vergleich zum Inneneinsatzteil steif bleibt. Bei einem Aufprall auf das Staufach würde somit nur das Inneneinsatzteil kollabieren. Als Materialien für den Deckel eignen sich beispielsweise ungeschäumte Kunststoffe wie PP oder PC/ABS.

Um die notwendige Kraftübertragung auf die Halter bzw. den Träger zu erreichen, damit auch die erfindungsgemäße plastische Deformation des Halters und/oder des Trägers bzw. die Rotation des Staufachs ausgenutzt werden kann, ist vorteilhafterweise der mit dem Staufach verbundene Halter mit der auch bei einem Aufprall steif bleibenden Struktur des Staufachs, beispielsweise mit dem oben genannten Deckel, verbunden, insbesondere in dieser integriert. Als Verbindung eignet sich beispielsweise eine Schweißverbindung, Schraubverbindung, Nietverbindung oder Klebeverbindung. Auch kann der Halter an die steif bleibende Struktur des Staufachs angeformt sein oder sogar Halter und zumindest ein Teilbereich der Struktur einstückig sein.

Alternativ kann natürlich auch ein beliebiges Staufach nach Stand der Technik verwendet werden, welches nicht für eine Kollabierung vorgesehen ist.

Eine weitere Ausführungsform der Erfindung sieht vor, dass sich der sichtseitige Deckel des Staufachs zumindest im geschlossenen Zustand des Staufachs direkt mit seiner Rückseite an dem Träger abstützt. Bei einem Aufprall auf den Deckel des Staufachs wird somit die Kraft nicht oder nicht nur über die Halter vom Staufachdeckel auf den Träger übertragen, sondern direkt vom Staufachdeckel auf den Träger. In diesem Falle bietet sich insbesondere an, den Deckel des Staufachs vorzugsweise rückseitig mit einer Rippenstruktur zu versehen, die die auf den Deckel wirkenden Kräfte gezielt auf den Träger weiterleiten können, die aber das Gewicht des Staufaches gering halten.

Als deformierbare Träger im Sinne der Erfindung bieten sich grundsätzlich vor allem Träger mit einer Pressprofilstruktur oder Gussprofilstruktur an. Beispielsweise kann ein geeigneter Träger ein Aluminiumgussprofil aufweisen.

Die Verbindungen zwischen den einzelnen Elementen der Staufachvorrichtung kann in einer dem Fachmann auf diesem Gebiet bekannten Weise realisiert werden. In Frage kommt der Einsatz von Befestigungsmitteln wie Nieten oder Schrauben, sowie stoffschlüssige Verbindungen wie Schweißen oder Kleben, oder aber auch formschlüssige Verbindungen. Eine Kombination dieser Verbindungsmöglichkeiten ist ebenfalls möglich.

Beispielsweise kann der Träger mit dem äußerem Rahmen über eine Schraubverbindung verbunden sein, der Träger mit dem einen Halter über einen Formschluss sowie einer Schraubverbindung, und der andere Halter mit dem Staufach über eine Schweißverbindung.

Die Drücke, nach denen die erfindungsgemäße Staufachvorrichtung ausgelegt ist, richten sich an den Crash-Normen Euro NCAP und FMVSS 208 aus. Die erfindungsgemäße Staufachvorrichtung ist somit in ihrer Funktion, d.h., zum einen in der Deformation und zum anderen in der Freigabe der Drehbewegung, insbesondere auf Aufprallkräfte im Bereich von 3,8 kN (Euro NCAP) bis 10 kN (FMVSS 208) ausgelegt. Druck des Aufpralls im Sinne der Erfindung und genannte Kräfte stehen dabei über die Kontaktfläche der aufprallenden Person direkt miteinander in Beziehung.

Die erfindungsgemäße Staufachvorrichtung lässt sich insbesondere als Bestandteil einer Instrumententafel in die Innenverkleidung eines Fahrzeugs integrieren.

Die Staufachvorrichtung würde in diesem Falle bevorzugt auf der Beifahrerseite in Kniehöhe angeordnet sein, wobei der äußere Rahmen der Staufachvorrichtung gegebenfalls der Querträger ist.

Vorzugsweise liegt die durch die Halter definierte Drehachse des Staufachs unterhalb der Kniehöhe und ist gegenüber dem Staufach nach vorne, also Richtung Motorraum, versetzt. Im Falle eines Aufpralles würden somit die Knie eines Beifahrers beim Auftreffen auf das Staufach, falls vorgesehen, eine ausweichende Drehbewegung des Staufaches auslösen können. Anderenfalls kann nur die Deformation des Trägers, des Halters und/oder des Inneneinsatzes des Staufaches den Aufprall abfangen, was aber prinzipiell ebenfalls vorgesehen sein kann.

## Patentansprüche

1. Staufachvorrichtung für Fahrzeuge,
beinhaltend ein Staufach (24), einen ersten Halter (3), einen zweiten Halter (4), eine Verriegelung und einen Träger (2),
wobei der Träger (2) zum einen mit einem äußeren Rahmen (1) verbunden ist,
und der Träger (2) zum anderen mit dem einen der beiden Halter verbunden ist,
und das Staufach (24) mit dem anderen der beiden Halter verbunden ist,
und der erste Halter (3) und der zweite Halter (4) drehbar gegeneinander gelagert sind, und durch die Verriegelung der erste Halter (3) und der zweite Halter (4) gegeneinander arretierbar sind,
**dadurch gekennzeichnet,**
**dass** durch einen insbesondere durch einen Aufprall eines Fahrzeuginsassen erzeugten hohen Drucks (P) auf das Staufach dass Staufach (24) sich gegen den äußeren Rahmen (1) verschiebt, aufgrund dessen, dass der Träger (2) durch den hohen Druck plastisch deformiert wird
und/oder der erste Halter (3) plastisch deformiert wird
und/oder der erste Halter (3) sich gegen den zweiten Halter (4) verdreht.

2. Staufachvorrichtung für Fahrzeuge nach Anspruch 1,
**dadurch gekennzeichnet,**
**dass** die Verriegelung daraus besteht,
**dass** ein verschiebbarer Bolzen (14) in einem der beiden Halter geführt ist,
und **dass** der andere Halter eine Haltestruktur (7) aufweist,
und der Bolzen (14) in diese Haltestruktur (7) eingreifen kann, um den ersten Halter (3) und den zweiten Halter (4) gegeneinander zu arretieren.

3. Staufachvorrichtung für Fahrzeuge nach Anspruch 2,
**dadurch gekennzeichnet,**
**dass** der Bolzen (14) so geschwächt ist, dass dieser bei dem hohen Druck (P) auf das Staufach (24) zur Freigabe einer Drehbewegung des Staufachs (24.) zerstört wird.

4. Staufachvorrichtung für Fahrzeuge nach Anspruch 2 oder Anspruch 3, **dadurch gekennzeichnet, dass** die sich an dem anderen Halter befindende Haltestruktur (7) so geschwächt ist, so dass diese bei dem hohen Druck (P) auf das Staufach (24) zur Freigabe einer Drehbewegung zerstört wird.

5. Staufachvorrichtung für Fahrzeuge nach Anspruch 1,
**dadurch gekennzeichnet,**
**dass** die Verriegelung daraus besteht, dass an einem der beiden Halter eine Nase (17c) vorgesehen ist, und an dem anderen Halter ein Übergriff (18b) vorgesehen ist, und der Übergriff die Nase im arretierten Zustand der beiden Halter übergreift.

6. Staufachvorrichtung für Fahrzeuge nach Anspruch 5,
**dadurch gekennzeichnet,**
**dass** der Übergriff (18b) so geschwächt ist, dass dieser bei dem hohen Druck (P) auf das Staufach (24) zerstört wird.

7. Staufachvorrichtung für Fahrzeuge nach Anspruch 5 oder Anspruch 6 **dadurch gekennzeichnet, dass** die Nase (17c) so geschwächt ist, dass diese bei einem hohen Druck (P) auf das Staufach (24) zerstört wird.

8. Staufachvorrichtung für Fahrzeuge nach einem der vorhergehenden Ansprüche, **dadurch gekennzeichnet, dass** der Träger (2) und der mit dem Träger verbundene Halter formschlüssig miteinander verbunden sind.

9. Staufachvorrichtung für Fahrzeuge nach einem der vorhergehenden Ansprüche, **dadurch gekennzeichnet, dass** der mit dem Träger verbundene Halter die Grundform eines Zylinders (10) besitzt.

10. Staufachvorrichtung für Fahrzeuge nach einem der vorhergehenden Ansprüche, **dadurch gekennzeichnet, dass** der mit dem Träger (2) verbundene Halter an seiner Umrandung ein oder mehrere Nocken oder Zähne (15) aufweist.

11. Staufachvorrichtung für Fahrzeuge nach einem der vorhergehenden Ansprüche, **dadurch gekennzeichnet, dass**, falls eine Deformation des Trägers erwünscht ist, der Träger aus Leichtmetall, Leichtmetallschaum, Stahl, Kunststoff, Kunststoffschaum, Kunststoffverbundwerkstoffen oder einer Zusammensetzung dieser Materialien besteht.

12. Staufachvorrichtung für Fahrzeuge nach einem der vorhergehenden Ansprüche, **dadurch gekennzeichnet, dass**, falls eine Deformation des mit dem Träger verbundenen Halters erwünscht ist, der mit dem Träger verbundene Halter aus Leichtmetall, Leichtmetallschaum, Stahl, Kunststoff, Kunststoffschaum, Kunststoffverbundwerkstoffen oder einer Zusammensetzung dieser Materialien besteht.

13. Staufachvorrichtung für Fahrzeuge nach einem der vorhergehenden Ansprüche, **dadurch gekennzeichnet, dass** der erste Halter und der zweite Halter ineinander gelagert sind.

14. Staufachvorrichtung für Fahrzeuge nach einem der vorhergehenden Ansprüche, **dadurch gekennzeichnet, dass** die Drehbewegung des ersten Halters gegen den zweiten Halter rotationsgedämpft ist.

15. Staufachvorrichtung für Fahrzeuge nach Anspruch 14, **dadurch gekennzeichnet,**
**dass** die Rotationsdämpfung ausgeführt ist als ein bewegliches, silikongedämpftes Zahnrad (9) an einem der beiden Halter angebracht ist
und eine Zahnstruktur (8) am anderen Halter angebracht ist, und das Zahnrad (9) in die Zahnstruktur (8) eingreift.

16. Staufachvorrichtung für Fahrzeuge nach einem der vorhergehenden Ansprüche, **dadurch gekennzeichnet, dass** das Staufach (24) ein Handschuhkasten in einer Instrumententafel ist.

## Claims

1. A storage-compartment device for vehicles, containing a storage compartment (24), a first holding means (3), a second holding means (4), a locking means and a support (2), wherein the support (2) is connected to an outer frame (1) on the one hand, and the support (2) is connected to one of the two holding means on the other hand, and the storage compartment (24) is connected to the other of the two holding means, and the first holding means (3) and the second holding means (4) are mounted so as to be rotatable with respect to each other, and the first holding means (3) and the second holding means (4) are capable of being locked with respect to each other by the locking means, **characterized in that**, on account of a high pressure (P) produced in particular by an impact by an occupant of the vehicle upon the storage compartment, the storage compartment (24) is pushed against the outer frame (1), as a result of which the support (2) is deformed in a plastic manner by the high pressure and/or the first holding means (3) is deformed in a plastic manner and/or the first holding means (3) is rotated towards the second holding means (4).

2. A storage-compartment device for vehicles according to Claim 1, **characterized in that** the locking means consists **in that** a displaceable pin (14) is guided in one of the two holding means, and the other holding means has a holding structure (7), and the pin (14) can engage in the said holding structure (7) in order to lock the first holding means (3) and the second holding means (4) with respect to each other.

3. A storage-compartment device for vehicles according to Claim 2, **characterized in that** the pin (14) is weakened in such a way that under the high pressure (P) upon the storage compartment (24) it is destroyed in order to release a rotational movement of the storage compartment (24).

4. A storage-compartment device for vehicles according to Claim 2 or Claim 3, **characterized in that** the holding structure (7) present on the other holding means is weakened in such a way that under the high pressure (P) upon the storage compartment (24) it is destroyed in order to release a rotational movement.

5. A storage-compartment device for vehicles according to Claim 1, **characterized in that** the locking means consists **in that** a projection (17c) is provided on one of the two holding means, and an engaging portion (18b) is provided on the other holding means, and the engaging portion engages over the projection in the locked state of the two holding means.

6. A storage-compartment device for vehicles according to Claim 5, **characterized in that** the engaging portion (18b) is weakened in such a way that it is destroyed under the high pressure (P) upon the storage compartment (24).

7. A storage-compartment device for vehicles according to Claim 5 or Claim 6, **characterized in that** the projection (17c) is weakened in such a way that it is destroyed under a high pressure (P) upon the storage compartment (24).

8. A storage-compartment device for vehicles according to any one of the preceding Claims, **characterized in that** the support (2) and the holding means connected to the support are connected to each other in a positively locking manner.

9. A storage-compartment device for vehicles according to any one of the preceding Claims, **characterized in that** the holding means connected to the support has the basic shape of a cylinder (10).

10. A storage-compartment device for vehicles according to any one of the preceding Claims, **characterized in that** on its edge the holding means connected to the support (2) has one or more cams or teeth (15).

11. A storage-compartment device for vehicles according to any one of the preceding Claims, **characterized in that**, if a deformation of the support is desired, the support consists of light metal, light-metal foam, steel, plastics material, plastics-material foam, composite plastics materials or a combination of the said materials.

12. A storage-compartment device for vehicles according to any one of the preceding Claims, **characterized in that**, if a deformation of the holding means connected to the support is desired, the holding means connected to the support consists of light metal, light-metal foam, steel, plastics material, plastics-material foam, composite plastics materials or a combination of the said materials.

13. A storage-compartment device for vehicles according to any one of the preceding Claims, **characterized in that** the first holding means and the second holding means are mounted one inside the other.

14. A storage-compartment device for vehicles according to any one of the preceding Claims, **characterized in that** the rotational movement of the first holding means is damped in terms of rotation with respect to the second holding means.

15. A storage-compartment device for vehicles according to Claim 14, **characterized in that** the rotational damping is carried out when a movable, silicone-damped toothed wheel (9) is attached to one of the two holding means, and a toothed structure (8) is attached to the other holding means, and the toothed wheel (9) engages in the toothed structure (8).

16. A storage-compartment device for vehicles according to any one of the preceding Claims, **characterized in that** the storage compartment (24) is a glove compartment in a dashboard.

## Revendications

1. Dispositif de vide-poches pour véhicules,
contenant un vide-poches (24), une première poignée (3), une seconde poignée (4), un verrouillage et un support (2),
le support (2) étant relié d'une part à un cadre extérieur (1),
et le support (2) étant relié d'autre part à l'une des deux poignées,
et le vide-poches (24) étant relié à l'autre des deux poignées,
et la première poignée (3) et la seconde poignée (4) étant logées de manière à pouvoir tourner l'une par rapport à l'autre, et la première poignée (3) et la seconde poignée (4) pouvant être bloquées l'une contre l'autre grâce au verrouillage,
**caractérisé en ce que**
du fait d'une pression élevée (P) produite en particulier par une collision avec un passager du véhicule sur le vide-poches, le vide-poches (24) se déplace contre le cadre extérieur (1), en raison du fait que le support (2) est plastiquement déformé par la pression élevée,
et/ou que la première poignée (3) est plastiquement déformée
et/ou que la première poignée (3) se tord contre la seconde poignée (4).

2. Dispositif de vide-poches pour véhicules selon la revendication 1,
**caractérisé en ce que**
le verrouillage a lieu du fait
qu'un boulon mobile (14) est guidé dans une des deux poignées,
et que l'autre poignée comprend une structure de retenue (7),
et que le boulon (14) peut se mettre en prise dans cette structure de retenue (7) afin de bloquer la première poignée (3) et la seconde poignée (4) l'une contre l'autre.

3. Dispositif de vide-poches pour véhicules selon la revendication 2,
**caractérisé en ce que**
le boulon (14) est affaibli de sorte que celui-ci, lors d'une pression élevée (P) sur le vide-poches (24), est détruit pour libérer un déplacement rotatif du vide-poches (24).

4. Dispositif de vide-poches pour véhicules selon la revendication 2 ou la revendication 3, **caractérisé en ce que** la structure de retenue (7) située sur l'autre poignée est affaiblie de sorte que celle-ci, lors d'une pression élevée (P) sur le vide-poches (24), est détruite pour libérer un déplacement rotatif.

5. Dispositif de vide-poches pour véhicules selon la revendication 1,
**caractérisé en ce que**
le verrouillage provient du fait qu'un bec (17c) est prévu sur une des deux poignées, et un recouvrement (18b) est prévu sur l'autre poignée, et le recouvrement dans l'état bloqué des deux poignées recouvre le bec.

6. Dispositif de vide-poches pour véhicules selon la revendication 5,
**caractérisé en ce que**
le recouvrement (18b) est affaibli de sorte que celui-ci, lors d'une pression élevée (P) sur le vide-poches (24), est détruit.

7. Dispositif de vide-poches pour véhicules selon la revendication 5 ou la revendication 6, **caractérisé en ce que** le bec (17c) est affaibli de sorte que celui-ci, lors d'une pression élevée (P) sur le vide-poches (24), est détruit.

8. Dispositif de vide-poches pour véhicules selon l'une quelconque des revendications précédentes, **caractérisé en ce que** le support (2) et la poignée reliée au support sont reliés l'un à l'autre par coopération de formes.

9. Dispositif de vide-poches pour véhicules selon l'une quelconque des revendications précédentes, **caractérisé en ce que** la poignée reliée au support possède la forme de base d'un cylindre (10).

10. Dispositif de vide-poches pour véhicules selon l'une quelconque des revendications précédentes, **caractérisé en ce que** la poignée reliée au support (2) comprend sur sa bordure une ou plusieurs cames ou dents (15).

11. Dispositif de vide-poches pour véhicules selon l'une quelconque des revendications précédentes, **caractérisé en ce que**, au cas où une déformation du support est souhaitée, le support est constitué de métal léger, de mousse de métal léger, d'acier, de matière plastique, de mousse synthétique, de matières composites synthétiques ou d'une composition de ces matières.

12. Dispositif de vide-poches pour véhicules selon l'une quelconque des revendications précédentes, **caractérisé en ce que**, au cas où une déformation de la poignée reliée au support est souhaitée, la poignée reliée au support est constituée de métal léger, de mousse de métal léger, d'acier, de matière plastique, de mousse synthétique, de matières composites synthétiques ou d'une composition de ces matières.

13. Dispositif de vide-poches pour véhicules selon l'une quelconque des revendications précédentes, **caractérisé en ce que** la première poignée et la seconde poignée sont logées l'une dans l'autre.

14. Dispositif de vide-poches pour véhicules selon l'une quelconque des revendications précédentes, **caractérisé en ce que** le déplacement rotatif de la première poignée contre la seconde poignée est amorti en rotation.

15. Dispositif de vide-poches pour véhicules selon la revendication 14, **caractérisé en ce que**
l'amortissement en rotation est aménagé comme une roue dentée (9) mobile à amortissement en silicone sur une des deux poignées et une structure dentée (8) est aménagée sur l'autre poignée, et la roue dentée (9) se met en prise dans la structure dentée (8).

16. Dispositif vide-poches pour véhicules selon l'une quelconque des revendications précédentes, **caractérisé en ce que** le vide-poches (24) est une boîte à gants dans un tableau de bord.
